# EUROPEAN PATENT APPLICATION

(11) **EP 1 098 519 A1**
(43) Date of publication of application: **09.05.2001**
(21) Application number: 99870232.8
(22) Date of filing: 05.11.1999
(51) Int. Cl.: H04N 5/74

(54) **Modular video display screen locking device**

(71) Applicant: B.V.B.A. System Technologies, 8820 Torhout (BE)
(72) Inventor: Opsomer Frederic, 8610 Kortemark (BE)
(74) Representative: Van Malderen, Joelle

(57) **Abstract**

A locking device for combining video screen modules, comprising a fastening means (21) comprising a retaining rod (23) and securing means (25) comprising a clamping means (27) able to secure said fastening means, characterised in that said locking device comprises a regulator (31) configured to control the action of said clamping means.

## Description

### Field of the invention

The present invention relates to the field of display screen, in particular high surface modular display screens, and locking devices therefor.

### State of the art

Modular display screen are regularly used in the entertainment business, as to provide enhanced viewing of e.g. music or sports performances for a large audience. Since most events of this kind are travelling (such as a music performance), the modular construction is a necessity, since a non modular construction cannot be transported easily. A major feature needs to be easy and quick assembling and disassembling, since this lowers the "dead time", i.e. the period when the screen cannot be used.

Recently, a modular screen construction comprising columns of modules, interconnected with special-purpose pin interlocking systems, made it possible to mount a high surface screen in less than a few hours. However, since the interconnected modules are rotated around the pin axis, a problem rises when two modules that are placed on top of each other are rotated: at the edge closest to the pin, the edges need to be sufficiently spaced from each other to allow rotation. A minimal aperture is necessary. When constructing a high-resolution screen, these apertures exceed the pixel-to-pixel distance, and a gap line in the screen becomes visible, which is detrimental for the viewing quality obtained.

It is possible to obtain a high resolution screen by combining the modules and bolting them together, but this will be a very labour and time intensive operation, which will dramatically increase the overall cost of the installation of the screen.

### Aims of the invention

The primary aim of the invention is to provide a high density surface modular video screen (with high resolution) which can be quickly assembled and disassembled.

In particular, the aim of the invention is to obtain a high resolution (and high surface) modular video screen, that has an even distribution of pixels on the whole surface and does not show gaps at the modules' edges.

### Summary of the invention

The present invention concerns a locking device for combining video screen modules, comprising a fastening means (21) comprising a retaining rod (23) and securing means (25) comprising a clamping means (27) able to secure said fastening means, characterised in that said locking device comprises a regulator (31) configured to control the action of said clamping means. Said fastening means are preferably secured to the top edge of a first screen module and said securing means are preferably secured to the bottom edge of a second screen module, so that the screen modules (second module positioned on first module) can be fastened to each other.

The locking device of the present invention can be further characterised in that the regulator, the fastening means and the securing means are configured to set the distance between the top edge of a first screen module and the bottom edge of a second screen module.

The securing means can comprise a lever configured to actuate the clamping means. The lever is preferably connected to the clamping means through the regulator.

In a preferred embodiment, the regulator is connected to the clamping means and the action of the clamping means is controlled by the position of the regulator in view of the clamping means.

Another aspect of the present invention is a method for assembling a modular video screen, characterised in that it comprises the following steps:
- positioning at least two screen modules comprising a locking device as described here above such that the fastening means of a first screen module and the securing means of a second screen module are in contact,
- securing said the locking device such that said first and said second screen module are connected,
- setting the regulator 31 such that the distance between the pixels located at the top edge of the first screen module and the pixels at the bottom edge of the second screen module is equal to the pitch value of the screen.

### Short description of the drawings

Figure 1 describes a framework that can be used as a base for an individual screen module of a modular screen according to the present invention.

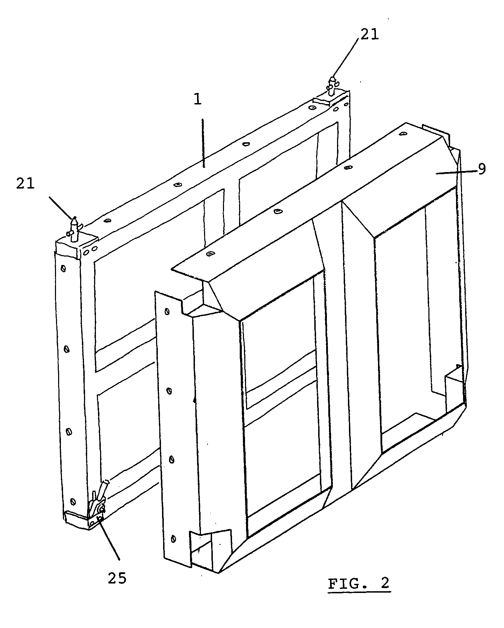

Figure 2 describes a module framework and a protective housing suitable to fit said framework.

Figure 3a shows a led-frame suitable for being mounted to a module framework.

Figure 3b depicts a possible positioning means for positioning a led-frame on a module framework.

Figure 4 describes the locking means according to the present invention.

Figure 5 a, b and c show the action of the locking device according to the present invention.

### Detailed description of the invention

The invention concerns a locking device for combining screen modules (to a large surface), high resolution video screen for the replay of video and graphical images to large audiences.

Large surface screen usually have a display area that is significantly greater than a normal television size or even a screen to which video images can be projected using an RGB video projector. Screen sizes of 20 to up op a 1000 m² are not uncommon. High resolution for such screens will require a pixel to pixel distance (pitch) of preferably less than 15 mm. This means that the gap between the edges of neighbouring screen modules needs to be less than 1 mm as well to avoid an aberrant screen line that is visible for the spectators.

### Example:

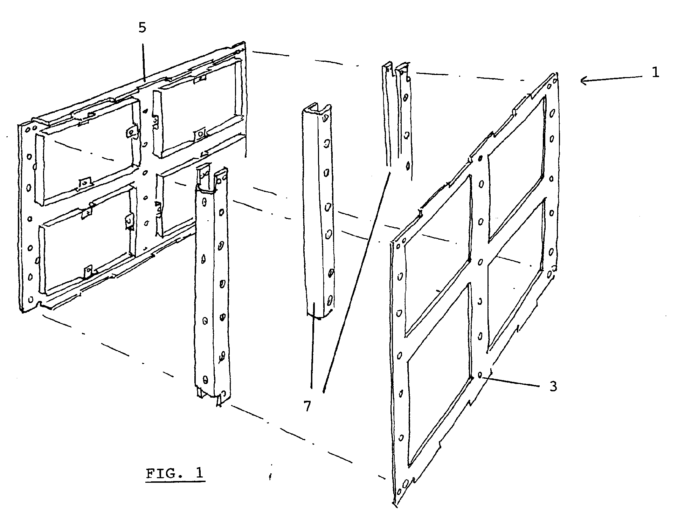

A modular screen, composed of at least four screen modules is presented. In figure 1, the framework 1 for a screen module is shown. The framework has to carry the structure and is therefor foreseen with a front panel 3, a back panel 5 and a set of ribs 7 to ensure proper structural integrity.

The assembled framework 1 is preferably shielded at the back panel side with a housing 9. Said housing protects the electronic parts that emerge from the module from atmospheric conditions and can ensure proper safety for personnel. The housing can comprise openings to ensure proper cooling of the electronic equipment and to allow easy access for maintenance purposes.

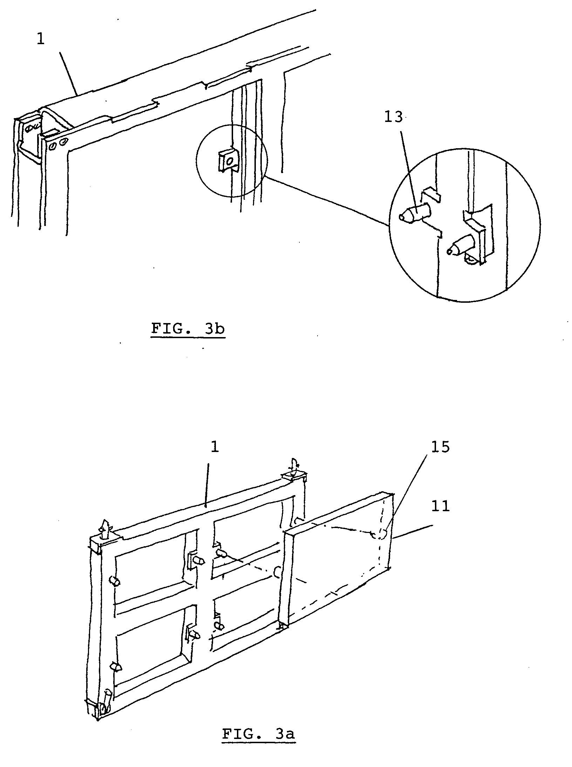

The module framework 1 is provided with one or several image units 11 that carry at least part of the electronic equipment (preferably LEDs) used to display the video images. A preferred embodiment of the framework comprises positioning pins 13 that correspond with positioning holes 15 in said image units to ensure easy and correct positioning of the image units 11 in the module framework 1, as shown in figures 3 a and b.

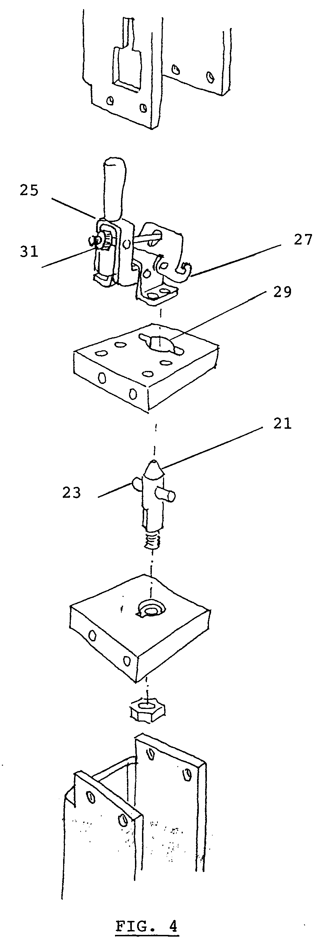

The locking device according to the present invention is shown in figure 4. A fastening means 21, preferably securely fastened to and extending from the top edge of a module framework, preferably comprises a retaining rod 23. Securing means 25 comprising clamping means 27 able to clamp said retaining rod 23 are provided preferably at the bottom edge of the module framework. A hole 29, is provided at the bottom edge of the module framework to allow the fastening means 21 to be clamped by the securing means 25.

The locking device further comprises a regulator 31, which allows to regulate the action of clamping means 27.

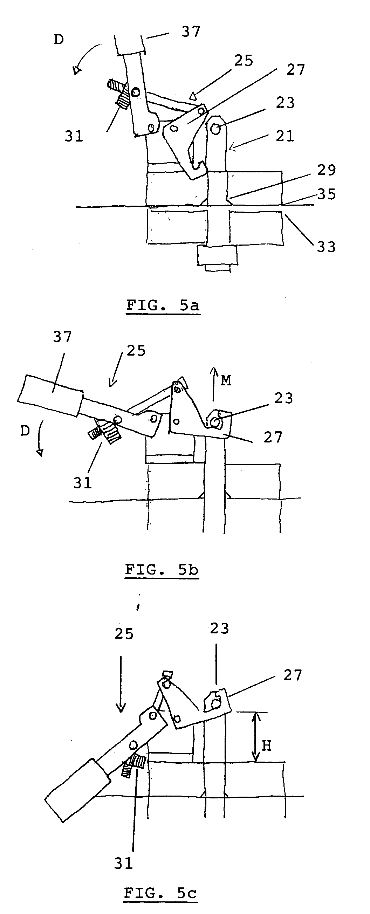

The action of the locking means according to the invention is shown in fig. 5 a to c. A top edge 33 of a first screen module having a fastening means 21 is being fastened to the bottom edge 35 of a second screen module. Said fastening means is registered with the hole 29 provided in bottom edge 35, allowing said fastening means to extend beyond bottom edge 35 into the second screen module.

Securing means 25 comprising clamping means 27 are provided at the bottom edge 35. The rotation of lever 37 according to direction D will provoke a rotation of clamping means 27 until clamping means 27 are registered with retaining rod 23, as seen in fig. 5b. Further movement in direction D will provide a movement M of the fastening means 21, resulting in a narrowing of the distance between the top edge 33 and the bottom edge 35. Minimal distance will be reached when lever 37 is in the position as indicated in fig 5 c, where the lever is in a stable and locked position. The distance H and thus also the distance between the top edge 33 and the bottom edge 35 is set by using regulator 31. A longer setting for regulator 31 will lead to a lower height H.

Since the distance between the top edge of a module and the bottom edge of the neighbouring module can be set as described using regulator 31, also the distance between the pixels at said top edge and said bottom edge can be set to the correct pitch to avoid dark lines in the screen.

## Claims

1. A locking device for combining video screen modules, comprising a fastening means (21) comprising a retaining rod (23) and securing means (25) comprising a clamping means (27) able to secure said fastening means, characterised in that said locking device comprises a regulator (31) configured to control the action of said clamping means.

2. A locking device such as in claim 1, characterised in that said fastening means are secured to the top edge of a first screen module and said securing means are secured to the bottom edge of a second screen module.

3. A locking device such as in claim 1 or 2, characterised in that the regulator, the fastening means and the securing means are configured to set the distance between the top edge of a first screen module and the bottom edge of a second screen module.

4. A locking device such as in any of the claims 1 to 3, characterised in that the securing means comprise a lever 37 configured to actuate the clamping means.

5. A locking device such as in claim 4, characterised in that the lever is connected to the clamping means through the regulator.

6. A locking device such as in any of the claims 1 to 5, characterised in that the regulator is connected to the clamping means and the action of the clamping means is controlled by the position of the regulator in view of the clamping means.

7. A method for assembling a modular video screen, characterised in that it comprises the following steps:
- positioning at least two screen modules comprising a locking device as described in any of the claims 1 to 6 such that the fastening means of a first screen module and the securing means of a second screen module are in contact,
- securing said the locking device such that said first and said second screen module are connected,
- setting the regulator 31 such that the distance between the pixels located at the top edge of the first screen module and the pixels at the bottom edge of the second screen module is equal to the pitch value of the screen.
